# FASCICULE DE BREVET EUROPEEN

(11) **EP 2 784 885 B1**
(45) Date de publication et mention de la délivrance du brevet: **02.05.2018**
(21) Numéro de dépôt: 14305357.7
(22) Date de dépôt: 12.03.2014
(51) Int. Cl.: H02B 1/052, H01T 4/06

(54) **Elément amovible pour un appareillage modulaire électrique muni d une poignée pivotante**
Abnehmbare Element für modulares elektrisches Gerät mit schwenkbarem Griff
Removable element for modular electrical equipment fitted with a swivel handle

(30) Priorité: 29.03.2013 FR 1352914
(43) Date de publication de la demande: 01.10.2014
(73) Titulaire: Legrand France, 87000 Limoges (FR); Legrand SNC, 87000 Limoges (FR)
(72) Inventeur: Fauvet, Philippe, 87700 Saint Priest sous Aixe (FR)
(74) Mandataire: Orsini, Fabienne

(56) Documents cités:
- WO-A1-2011/063766
- US-A1- 2012 206 848

## Description

La présente invention concerne un élément amovible à rapporter dans un logement d'une embase d'un appareillage modulaire électrique destiné à être monté sur un rail support, cet élément amovible comprenant un boîtier isolant de forme globalement parallélépipédique qui présente une face avant accessible à l'utilisateur, deux faces principales latérales parallèles s'élevant sur la hauteur du boîtier et deux faces transversales opposées, ainsi que des moyens de préhension de ce boîtier.

Elle concerne également un appareillage modulaire électrique comprenant une embase munie de moyens de montage sur un rail de support et un logement logeant un tel élément amovible.

Cette invention trouve une application particulièrement avantageuse dans la réalisation d'un appareillage électrique modulaire du type parafoudre.

### ARRIERE-PLAN TECHNOLOGIQUE

Certains appareillages modulaires électriques, tel les parafoudres, comprennent deux parties : une embase munie de moyens de montage sur un rail de support et un élément amovible adapté à être logé dans un logement de l'embase, et à être connecté électriquement à celle-ci.

Ainsi, l'élément amovible peut facilement être remplacé lorsqu'il est par exemple endommagé ou à usage unique, comme cela est le cas dans les parafoudres, tandis que l'embase de l'appareillage électrique reste montée sur le rail de support.

Or, lorsque plusieurs appareillages modulaires électriques sont montés les uns à côté des autres sur le rail de support pour former une rangée d'appareillages modulaires, ou lorsque l'embase peut accueillir une pluralité d'éléments amovibles les uns à côté des autres, il peut être difficile d'extraire un seul élément amovible de l'appareillage modulaire correspondant.

Afin de faciliter cet extraction, on connaît notamment des éléments amovibles d'appareillages modulaires électriques tels que décrits précédemment, dont le boîtier est muni de zones de préhension avec des stries pour faciliter la prise en main de ces éléments amovibles.

L'opérateur peut alors saisir l'élément amovible entre deux doigts pour son extraction.

Cette solution s'avère cependant peu ergonomique car il n'est pas aisé pour l'opérateur de saisir sélectivement l'élément amovible qu'il souhaite extraire.

Il est également connu de prévoir, dans le boîtier de l'élément amovible de l'appareillage modulaire, un moyen d'interaction avec un outil pour faciliter l'extraction de cet élément amovible de l'appareillage modulaire correspondant. Il s'agit par exemple d'un logement pouvant accueillir l'extrémité d'un tournevis qui agit comme un levier pour permettre de désengager l'élément amovible de l'embase de l'appareillage modulaire électrique.

Cependant, cette solution présente l'inconvénient de nécessiter l'utilisation d'un outil particulier.

Enfin on connaît des documents US2012/0206848 et WO2011/063766 des éléments amovibles d'appareillages modulaires pourvus de poignées de préhension faisant saillie de la face avant desdits éléments amovibles.

Selon le document US2012/0206848, la poignée est constituée d'un simple montant droit monté pivotant sur la face avant du boîtier de l'élément amovible, entre une position repliée, dans laquelle ce montant droit s'étend sur la majeure partie de la face avant du boîtier de l'élément amovible, et une position déployée, dans laquelle ce montant droit s'étend perpendiculairement à ladite face avant du boîtier de l'élément amovible pour être attrapé par l'utilisateur afin de tirer l'élément amovible hors de l'embase de l'appareillage modulaire.

L'inconvénient majeur d'une telle disposition réside dans le fait que la poignée de préhension et le boîtier de l'élément amovible sont conçus de telle sorte qu'en position repliée, la poignée de préhension occupe pratiquement toute la surface de la face avant du boîtier de l'élément amovible laissant très peu de place disponible pour des marquages éventuels, très utiles notamment pour indiquer à l'utilisateur à quelle partie du réseau électrique est relié ledit appareillage modulaire.

Selon le document WO2011/063766, la poignée est un simple levier monté à pivotement sur le boîtier de l'élément amovible de sorte que, quelle que soit sa position d'utilisation, une partie de ce levier fait saillie de la face avant du boîtier de l'élément amovible.

Cette disposition du levier de préhension n'est ni esthétique, ni pratique.

### OBJET DE L'INVENTION

Afin de remédier aux inconvénients précités de l'état de la technique, la présente invention propose un élément amovible pouvant être extrait manuellement de l'embase, de manière simple et rapide.

Plus particulièrement, on propose selon l'invention un élément amovible tel que décrit en introduction, dans lequel lesdits moyens de préhension comportent une poignée présentant une forme en L avec une branche de montage montée pivotante sur ce boîtier et une branche de préhension pour faire pivoter la poignée entre une position repliée dans laquelle ladite poignée s'étend le long d'une partie de la face avant et d'une partie de l'une des deux faces transversales dudit boîtier, adjacente à ladite face avant, et une position déployée dans laquelle ladite poignée s'étend en saillie du boîtier, à partir de la face avant dudit boîtier.

Ainsi, avantageusement, grâce à l'invention, pour extraire l'élément amovible du logement de l'embase de l'appareillage modulaire, l'utilisateur fait pivoter la poignée depuis sa position repliée jusqu'à sa position déployée, puis il tire sur cette poignée. De cette façon, il extrait aisément ledit élément amovible sans utiliser d'outil particulier. Au surplus, lorsque ladite poignée est repliée sur ledit élément amovible, elle s'intègre parfaitement dans le gabarit dudit élément amovible sans former de surépaisseur, et constitue alors un moyen d'extraction discret et efficace. Avantageusement, du fait de la forme en L de la poignée et de son montage particulier sur le boîtier de l'élément amovible, en position repliée, ladite poignée laisse libre la majeure partie de la surface de la face avant du boîtier de l'élément amovible pour y apposer d'éventuels marquages facilitant l'utilisation de l'élément amovible.

D'autres caractéristiques non limitatives et avantageuses de l'élément amovible conforme à l'invention sont les suivantes :
- ladite poignée est montée pivotante autour d'un axe de pivotement perpendiculaire aux faces principales latérales parallèles du boîtier ;
- ledit axe de pivotement s'étend à proximité de la face avant du boîtier ;
- ladite branche de préhension de ladite poignée forme un moyen de blocage de cette poignée dans sa position repliée, adapté à coopérer avec une partie d'un plastron d'un coffret électrique ;
- la face avant et la face transversale correspondante du boîtier comprennent un renfoncement pour loger ladite poignée dans sa position repliée,

de manière à ce que, dans cette position repliée, la surface externe de cette poignée vient à l'affleurement de la face avant du boîtier ;
- la branche de montage de ladite poignée comprend deux montants latéraux qui, dans la position repliée de la poignée, longent les faces principales latérales parallèles du boîtier ;
- la branche de préhension comporte, à son extrémité libre, un retour, qui, lorsque la poignée est dans sa position repliée, forme un élément de blocage adapté à se positionner derrière un plastron d'un coffret électrique ;
- le débattement angulaire entre les positions repliée et déployée de la poignée est compris entre 60 et 120 degrés ;
- ledit boîtier renferme un mécanisme électrique de coupure pour un appareillage modulaire électrique du type parafoudre.

L'invention propose également un appareillage modulaire électrique comprenant une embase munie de moyens de montage sur un rail de support et d'un logement logeant un élément amovible tel que décrit précédemment, connecté électriquement à ladite embase.

### DESCRIPTION DETAILLEE D'UN EXEMPLE DE RÉALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est une vue schématique en perspective d'un premier mode de réalisation de l'élément amovible selon l'invention, avec la poignée dans sa position repliée,
- la figure 2 est une vue schématique en perspective de l'élément amovible de la figure 1, avec la poignée dans sa position déployée,
- la figure 3 est une vue schématique en perspective éclatée de l'élément amovible de la figure 1,
- la figure 4 est une vue schématique en perspective d'une rangée d'appareillages modulaires électriques incluant l'élément amovible de la figure 1,
- la figure 5 est une vue schématique de profil de l'un des appareillages modulaires de la figure 4,
- la figure 6 est une vue schématique de profil de l'élément amovible de l'appareillage modulaire de la figure 5,
- la figure 7 est une vue schématique de face d'un coffret électrique logeant la rangée d'appareillages modulaires électriques de la figure 4,
- la figure 8 est une vue schématique en perspective du coffret électrique de la figure 7, avec une coupe selon le plan P de cette figure 7,
- les figures 9 à 11 sont des vues schématiques en perspective d'un deuxième mode de réalisation de l'élément amovible selon l'invention,
- les figures 12 et 13 sont des vues schématiques en perspective d'un troisième mode de réalisation de l'élément amovible selon l'invention,
- les figures 14 et 15 sont des vues en perspective et de face d'une poignée d'un quatrième mode de réalisation de l'élément amovible selon l'invention, et
- la figure 16 est une vue de côté d'une partie du boîtier du quatrième mode de réalisation de l'élément amovible selon l'invention.

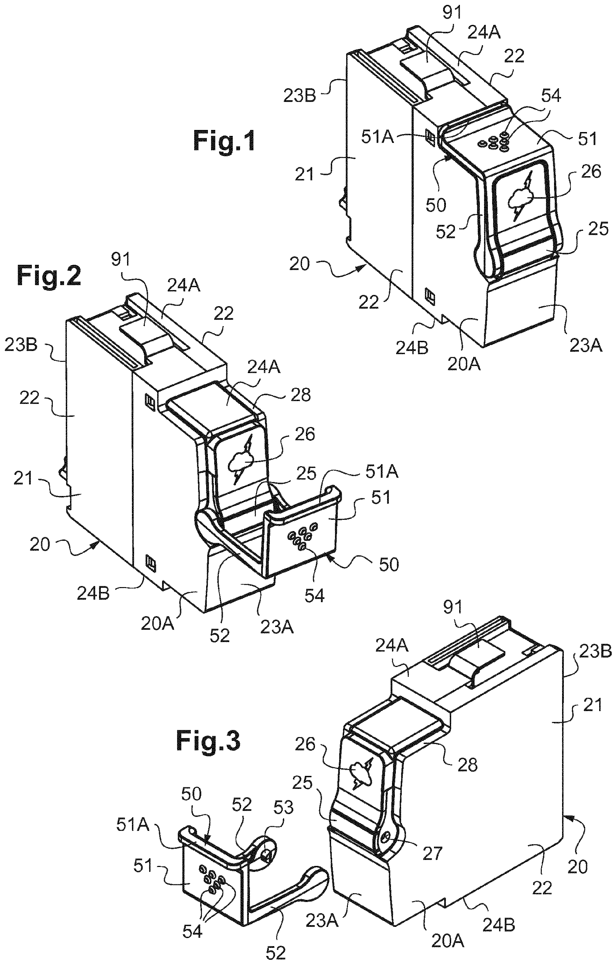

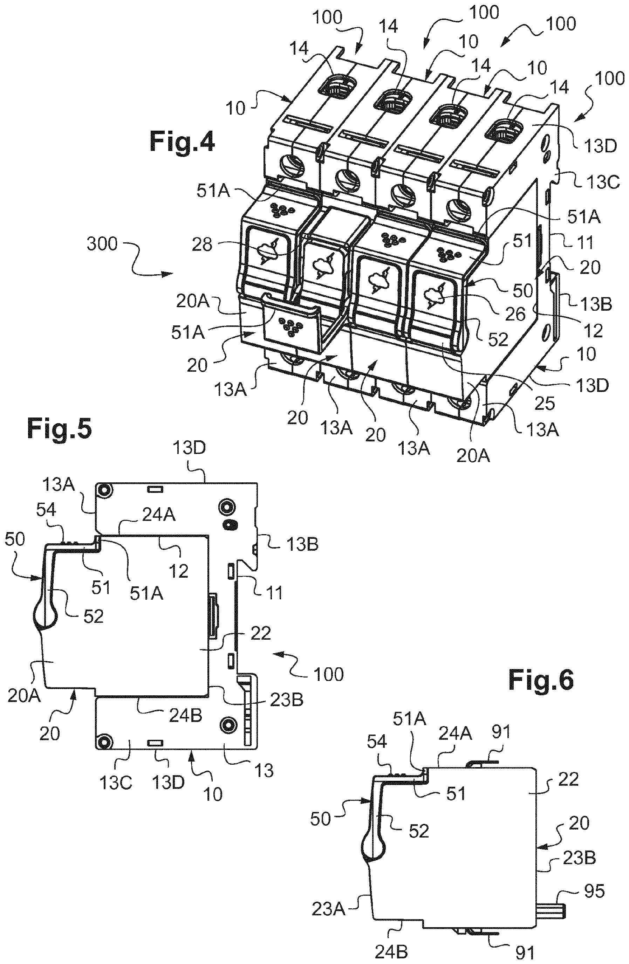

Sur les figures 1 à 3, 9 à 13 et 14 à 15, on a représenté différents modes de réalisation d'un élément amovible 20 ; 30 ; 40 ; 20' d'un appareillage modulaire électrique 100, représenté sur les figures 4, 5, 7 et 8.

L'appareillage modulaire 100 comporte ici, outre l'élément amovible 20 ; 30 ; 40, 20', une embase 10 comprenant un logement 12 dans lequel l'élément amovible peut être rapporté (figure 5).

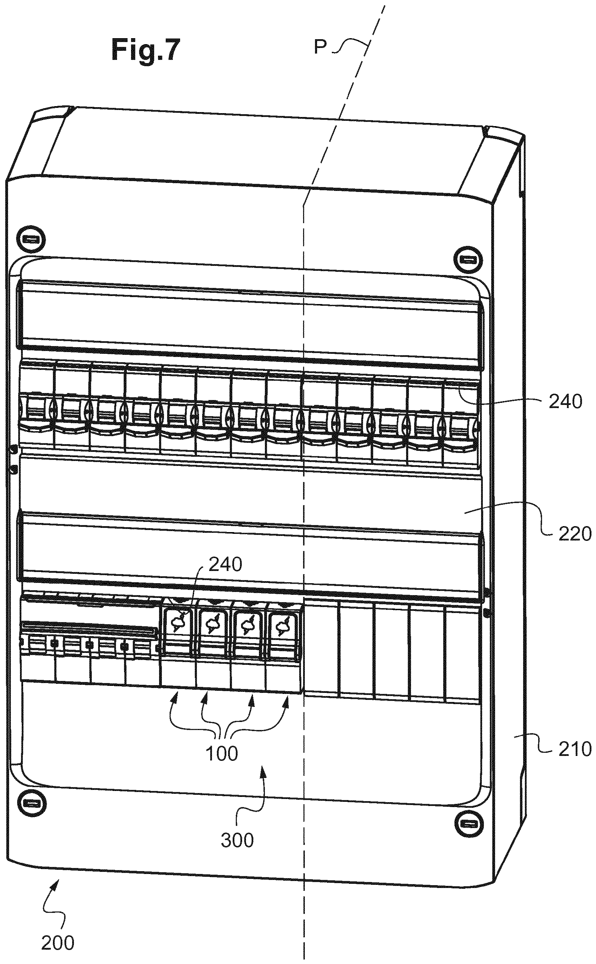

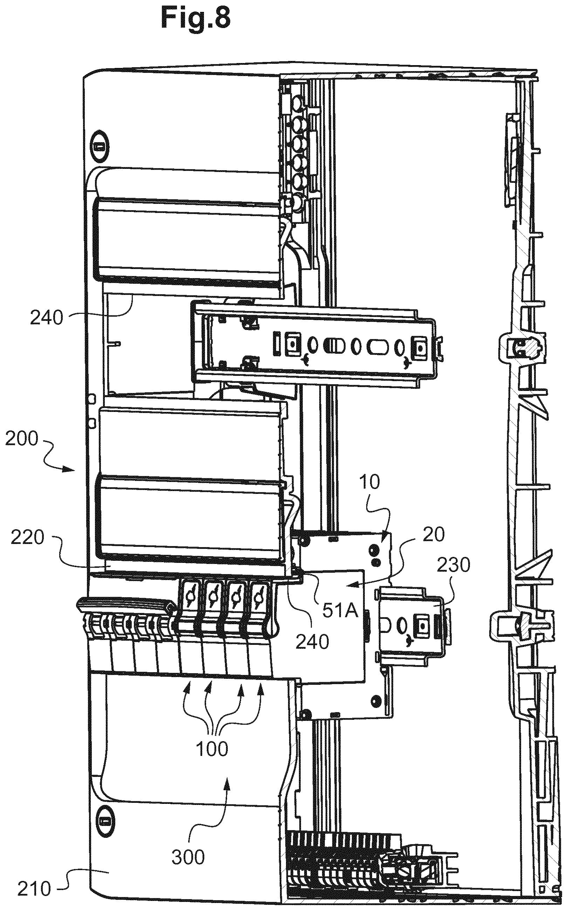

L'embase 10 est par ailleurs munie de moyens de montage de l'appareillage modulaire 100 sur un rail de support 230. Ce rail de support 230 s'étend habituellement dans le fond d'un coffret électrique 200 dont un exemple est représenté sur les figures 7 et 8.

L'appareillage modulaire 100 présente une largeur standardisée égale à un multiple de la largeur d'un module de base environ égale à 18 millimètres, et il est destiné à être aligné avec d'autres appareils modulaires électriques pour former une rangée 300 d'appareillages modulaires (voir figures 4, 7 et 8).

La rangée 300 d'appareillages modulaires représentée ici comporte quatre appareillages modulaires identiques 100. Cependant, cette rangée peut comprendre un nombre quelconque d'appareillages électriques, dans les limites de la largeur du coffret 200, et ces appareillages modulaires peuvent être de différents types.

Dans les exemples représentés ici, l'appareillage modulaire 100 présente une largeur égale à la largeur d'un module de base.

Il s'agit par ailleurs ici d'un appareillage modulaire du type parafoudre monophase et l'élément amovible 20 ; 30; 40 ; 20' dont il s'agit ici est une cassette logeant une varistance ainsi qu'un déconnecteur thermique du parafoudre 100.

Selon une variante non représentée ici, l'appareillage modulaire électrique peut présenter une largeur égale à deux, trois ou quatre fois la largeur d'un module de base. Il loge alors respectivement deux, trois ou quatre éléments amovibles (cassettes à varistance) de manière à former un parafoudre biphase, triphase ou quadriphase.

Plus précisément, comme le montre plus particulièrement la figure 5, l'embase 10 comporte un corps 13 isolant de forme globalement parallélépipédique, réalisé par exemple en matière plastique, qui présente une face avant 13A tournée vers l'utilisateur, une face arrière 13B opposée à la face avant, deux faces latérales 13C parallèles et deux faces transversales 13D de raccordement électrique opposées (figures 4 et 5).

Lesdites deux faces latérales 13C du corps 13 de l'embase 10 s'élèvent sur toute la hauteur de son corps et sont ici séparées d'une largeur égale à une fois la largeur d'un module de base.

Elles sont destinées à être mises en contact avec les faces latérales 13C d'autres embases 10 d'appareillages modulaires 100 pour former ladite rangée 300 d'appareillages modulaires 100 (figure 4).

La face arrière 13B du corps 13 de l'appareillage modulaire 100 comporte de manière classique une encoche 11 pour le montage de ce corps 13 sur un rail de support 230 (représenté sur la figure 8). Les moyens de montage de l'appareil modulaire sur ce rail de support sont adaptés à plaquer ce rail de support 230 au fond de cette encoche 11.

Ces moyens de montage comportent ici par exemple un ou deux verrous s'étendant le long de la face arrière 13B du corps 13 de l'embase 10 de l'appareillage modulaire 100. Chaque verrou s'étend à proximité de l'encoche 11, perpendiculairement à celle-ci.

L'une des faces transversales 13D supérieures du corps 13 de l'embase 10 est appelée face d'entrée et est adaptée au raccordement électrique de l'appareillage modulaire 100 au réseau électrique.

La face d'entrée de l'embase 10 de l'appareillage modulaire 100 comporte à cet effet une ouverture d'accès 14 qui débouche sur une borne de connexion logée dans le corps 13 de cette embase 10 de l'appareillage modulaire 100 (figure 4).

Ces bornes de connexion peuvent être des bornes de connexion à lyre ou à vis ou tout autre type de bornes de connexion. Elles peuvent être adaptées à la connexion d'un peigne d'alimentation ou de câbles d'alimentation du réseau électrique.

Le logement 12 de l'embase 10, destiné à accueillir l'élément amovible 20 ; 30 ; 40 ; 20' se présente comme une découpe du corps 13 de l'embase 10, qui traverse ce corps 13 de l'une des faces latérales 13C à l'autre et débouche sur la face avant 13A du corps 13.

L'embase 10 de l'appareillage modulaire 100 comprend par ailleurs, à l'intérieur de son corps 13, un circuit électrique pour le raccord d'un mécanisme électrique de l'élément amovible 20 ; 30 ; 40 ; 20' à la borne de connexion logée dans le corps 13 de l'embase 10.

A cet effet, comme cela est expliqué plus loin, au moins l'une des faces internes du logement 12 de l'embase 10 comporte un élément de contact électrique adapté à établir une connexion électrique entre le circuit électrique logé à l'intérieur de l'embase 10 et le mécanisme électrique logé à l'intérieur de l'élément amovible 20 ; 30 ; 40 ;20'.

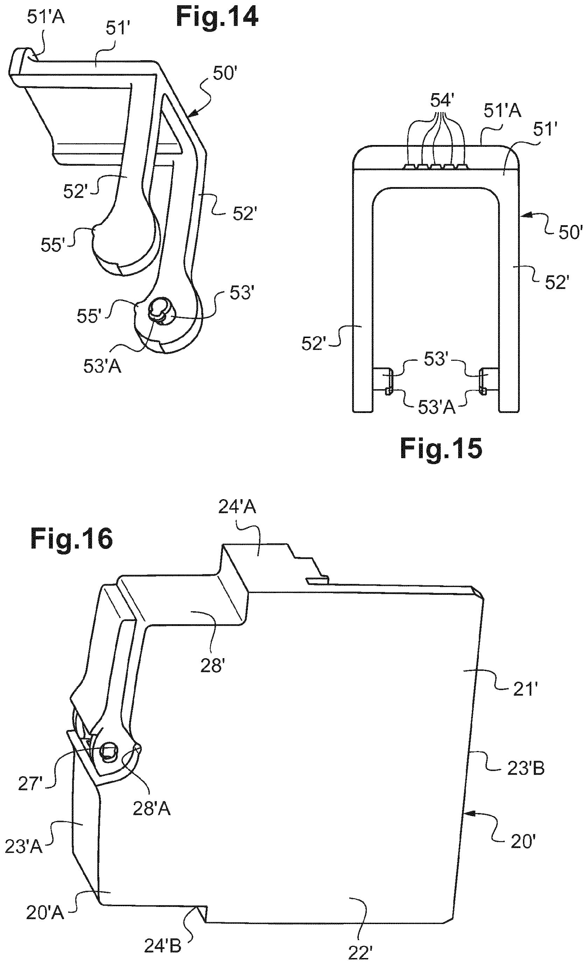

Comme le montrent les figures 1 à 3, 9 à 13 et 14 à 16, l'élément amovible 20 ; 30 ; 40 ; 20' comporte un boîtier 21 ; 31 ; 41 ; 21' isolant de forme globalement parallélépipédique, réalisé par exemple en matière plastique, qui présente deux faces latérales principales 22 ; 32 ; 42 ; 22' parallèles, une face avant 23A ; 33A ; 43A ; 23'A accessible à l'utilisateur, une face arrière 23B ; 33B ; 43B; 23'B opposée à la face avant 23A; 33A; 43A; 23'A, et deux faces transversales 24A, 24B; 34A, 34B; 44A, 44B; 24'A, 24'B de raccordement électrique opposées. Les deux faces transversales 24A, 24B ; 34A, 34B ; 44A, 44B ; 24'A, 24'B présentent chacune un décroché, si bien qu'une partie de ces faces transversales est adjacente à la face avant. Ce boîtier 21 ; 31 ; 41 ; 21' est ici par exemple réalisé en deux parties (une seule des deux parties est représentée sur la figure 16).

Ici, lesdites deux faces latérales principales 22 ; 32 ; 42 ; 22' du boîtier 21 ; 31 ; 41 ; 21' de l'élément amovible 20 ; 30 ; 40 ; 20' s'élèvent sur toute la hauteur de son boîtier et sont séparées d'une largeur égale à une fois la largeur d'un module de base.

Ainsi, lorsque l'élément amovible 20 ; 30 ; 40 ; 20' est inséré dans le logement 12 de l'embase 10 destiné à le recevoir, les faces latérales principales 22 ; 32 ; 42 ; 22' de l'élément amovible 20 ; 30 ; 40 ; 20' s'étendent ici dans le prolongement des faces latérales 13C de l'embase 10.

Les faces latérales principales 22 ; 32 ; 42 ; 22' du boîtier 21 ; 31 ; 41 ; 21' de l'élément amovible 20 ; 30 ; 40 ; 20' sont ainsi destinées à être mises en contact avec les faces latérales principales d'autres éléments amovibles dans ladite rangée 300 d'appareillages modulaires 100 (voir figure 4).

L'insertion de l'élément amovible 20 ; 30 ; 40 ; 20' dans le logement 12 du corps 13 de l'embase 10 se fait par coulissement de cet élément amovible 20 ; 30 ; 40 ; 20' dans ce logement 12, selon une direction parallèle aux faces latérales 13C du corps 13 de l'embase 10.

Un élément de détrompage 95 peut être avantageusement prévu sous la forme d'une tige faisant saillie de la face arrière 23B du boîtier 21 de l'élément amovible. Cet élément de détrompage empêche l'introduction de l'élément amovible 20 ; 30 ; 40 ; 20' dans le logement 12 de l'embase 10 à l'envers, c'est-à-dire avec inversion des faces transversales supérieure et inférieure.

Lors de ce coulissement, une partie de chaque face transversale 24A, 24B ; 34A, 34B ; 44A, 44B ; 24'A, 24'B du boîtier 21 ; 31 ; 41 ; 20' de l'élément amovible puis la face arrière 23B ; 33B ; 43B ; 23'B de ce boîtier viennent au contact des faces internes du logement 12 du corps de l'embase 10.

En particulier, une lame de contact 91 ; 92 ; 93 qui s'étend en saillie de chaque face transversale 24A, 24B ; 34A, 34B ; 44A, 44B du boîtier 21 ; 31 ; 41 de l'élément amovible 20 ; 30 ; 40 vient se plaquer contre les éléments de contact électrique correspondants des faces internes du logement 12 du corps 13 de l'embase 10.

A cet effet, le logement 12 du corps 11 de l'embase 10 présente ici, en négatif, la forme du boîtier 21 ; 31 ; 41 ; 21' de l'élément amovible 20 ; 30 ; 40 ; 20'.

L'élément amovible 20 ; 30 ; 40 est ici retenu dans le logement 12 du corps 13 de l'embase 10 par la pression exercée par les éléments de contact électrique de l'embase 10 sur les lames de contact 91 ; 92 ; 93 de l'élément amovible 20 ; 30 ; 40.

En variante, on peut envisager que le boîtier de l'élément amovible comprend des moyens de retenue sur le corps de l'embase, par exemple des moyens de clipsage sur ce corps de l'embase.

Comme le montrent plus particulièrement les figures 4 et 7, l'élément amovible 20 ; 30 ; 40 est seulement partiellement logé dans le logement 12 de l'embase 10 : une partie de façade 20A de cet élément amovible 20 ; 30 ; 40 fait saillie de la face avant 13A du corps 13 de l'embase 10.

Cette partie de façade 20A ; 30A ; 40A ; 20'A de l'élément amovible 20 ; 30 ; 40 ; 20' forme une zone médiane de l'appareillage électrique 100 par laquelle ledit élément amovible 20 ; 30 ; 40 ; 20' est destiné à émerger hors d'un plastron 220 (figures 7 et 8) du coffret électrique 200, au travers d'une fenêtre de ce plastron 220, lorsque l'appareillage électrique 100 est en place sur le rail de support 230 (figures 7 et 8).

La partie de façade 20A ; 30A ; 40A ; 20'A porte la face avant 23A ; 33A ; 43A ; 23'A accessible à l'utilisateur. Elle est délimitée transversalement par ladite partie des faces transversales 24A, 24B; 34A, 34B; 44A, 44B; 24'A,24'B adjacente à la face avant 23A ; 33A ; 43A; 23'A et une partie des faces principales latérales 22 ; 32 ;42 ; 22'.

La face avant 23A; 33A; 43A du boîtier 21 ; 31 ; 41 de l'élément amovible 20 ; 30 ; 40 comporte ici un voyant 25 ; 35 ; 45 et un pictogramme 26 ; 36 ; 46.

Le voyant 25 ; 35 ; 45 indique l'état de fonctionnement du mécanisme électrique logé à l'intérieur de l'élément amovible 20 ; 30 ; 40 : il est vert lorsque ce mécanisme fonctionne normalement et devient orange lorsqu'il est endommagé et doit être remplacé.

Le pictogramme 26 ; 36 ; 46 indique la fonction de l'appareillage modulaire 100 dont fait partie l'élément amovible 20 ; 30 ; 40 : ici le pictogramme indique que l'élément amovible est un élément amovible pour un parafoudre.

Lorsque le voyant 25 ; 35 ; 45 indique que l'élément amovible 20 ; 30 ; 40 doit être remplacé, l'utilisateur doit extraire l'élément amovible 20; 30 ; 40 endommagé de l'embase 10 de l'appareillage modulaire 100 pour le remplacer.

A cet effet, l'élément amovible 20 ; 30 ; 40 ; 20' comprend des moyens de préhension permettant à l'utilisateur de tirer l'élément amovible 20 ; 30 ; 40 ; 20' vers lui, hors de l'embase 10.

De manière remarquable, ces moyens de préhension comportent une poignée 50 ; 60 ; 70 ; 50' présentant une forme en L avec une branche de montage 52 ; 62 ; 72 ; 52' montée pivotante sur le boîtier 21 ; 31 ; 41 ; 21' de cet élément amovible 20 ; 30 ; 40 et une branche de préhension 51 ; 61 ; 71 ; 51' pour faire pivoter la poignée 50 ; 60 ; 70 entre une position repliée, représentée sur la figure 1, dans laquelle ladite poignée 50 ; 60 ; 70 ; 50' s'étend le long d'une partie de la face avant 23A ; 33A ; 43A ; 23'A dudit boîtier 21 ; 31 ; 41 ; 21' ainsi que le long de la partie d'une des deux faces transversales 24A; 34A; 44A; 24'A adjacente à ladite face avant 23A ; 23A ; 43A; 23'A, et une position déployée, représentée sur la figure 2, dans laquelle ladite poignée 50 ; 60 ; 70 ; 50' s'étend en saillie du boîtier 21 ; 31 ; 41 ; 21', à partir de la face avant 23A ; 33A ; 43A ; 23'A dudit boîtier.

Plus précisément, la branche de montage 52 ; 62 ; 72 ; 52' de la poignée 50 ; 60 ; 70 ; 50' comprend ici, quel que soit le mode de réalisation considéré, deux montants latéraux qui, dans la position repliée de la poignée 50 ; 60 ; 70 ; 50', longent les faces principales latérales parallèles 22 ; 32 ; 42 ; 22' du boîtier 21 ; 31; 41 ; 21'.

La branche de montage 52 ; 62 ; 72 ; 52' est ainsi évidée et laisse apparaître avantageusement, entre ses deux montants latéraux, la face avant 23A ; 33A ; 43A ; 23'A du boîtier de l'élément amovible 20 ; 30 ; 40 ; 20', qui porte le voyant 25 ; 35 ; 45 et le pictogramme 26 ; 36 ; 46.

Aux extrémités libres des montants latéraux de la branche de montage 52 ; 62 ; 72 ; 52' de la poignée 50 ; 60 ; 70 ; 50' sont prévus deux pions 53 ; 53' qui s'étendent en regard, l'un vers l'autre, à partir des faces internes de ces montants latéraux (figures 3 et 15).

Ces deux pions 53 ; 53' forment ensemble un axe de pivotement de la poignée 50 ; 60 ; 70 ; 50'. Ils sont reçus dans des ouvertures 27 ; 27' ménagées dans les parois du boîtier 21 ; 31 ; 41 ; 21' de l'élément amovible correspondant aux faces latérales principales 22, 32, 42, 22' de ce boîtier.

Chaque pion 53 ; 53' présente ici une forme cylindrique, avec éventuellement un pan incliné facilitant son insertion dans l'ouverture 27 ; 27' du boîtier 21 ; 31 ; 41 ; 21' correspondante lors du montage de la poignée sur le boîtier.

Ce pan incliné est positionné de telle sorte que, dans la position déployée de la poignée, il soit tourné à l'opposé de l'utilisateur, vers l'élément amovible. De cette façon, lorsque l'utilisateur tire la poignée vers lui, celle-ci ne risque pas de se désolidariser du boîtier de l'élément amovible.

L'axe de pivotement formé par les deux pions 53 ; 53' de la poignée 50 ; 60 ; 70 ; 50' s'étend perpendiculairement aux montants latéraux de la branche de montage 52 ; 62 ; 72 ; 52' de la poignée 50, 60, 70 ; 50' et perpendiculairement aux faces principales latérales parallèles 22 ; 32 ; 42 ; 22' du boîtier 21 ; 31 ; 41 ; 21' de l'élément amovible 20 ; 30 ; 40 ; 20'.

En outre, il s'étend à proximité de la face avant 23A ; 33A ; 43A ; 23'A du boîtier 21 ; 31 ; 41 ; 21' de l'élément amovible 20 ; 30 ; 40 ; 20'.

L'axe de pivotement de la poignée 50, 60, 70, 50' s'étend ici sensiblement dans un plan médian de l'élément amovible. En variante, il peut être décalé par rapport à ce plan médian.

Avantageusement, selon le dernier mode de réalisation représenté sur les figures 14 à 16, chaque pion 53' comporte un moyen de verrouillage axial du pion 53' dans l'ouverture 27' correspondante de la paroi du boîtier 21' de l'élément amovible 20' de sorte que, lors de l'extraction de l'élément amovible 20' en tirant sur la poignée 50', ladite poignée 50' est empêchée de se désolidariser dudit boîtier 21'. Ici, comme le montrent plus particulièrement les figures 14 et 15, le moyen de verrouillage axial est un ergot 53'A prévu sur le bord d'extrémité libre de chaque pion 53'. Chaque ergot 53'A est destiné à venir s'accrocher derrière la paroi correspondante du boîtier 21 lors de l'insertion de chaque pion 53' dans l'ouverture 27' correspondante du boîtier 21'.

La branche de préhension 51 ; 61 ; 71 ; 51' de la poignée 50 ; 60 ; 70 ; 50' relie les deux montants latéraux formant la branche de montage 52 ; 62 ; 72 ; 52' de cette poignée.

Différentes formes de la branche de préhension 51 ; 61 ; 71 ; 51' de la poignée 50 ; 60 ; 70 ; 50' peuvent être envisagées.

Dans les premier, deuxième et quatrième modes de réalisation de la poignée, représentés sur les figures 1 à 8, 9 à 11, 14 et 15, elle présente une forme rectangulaire de largeur égale à la largeur de l'élément amovible sur toute la longueur de cette branche de préhension.

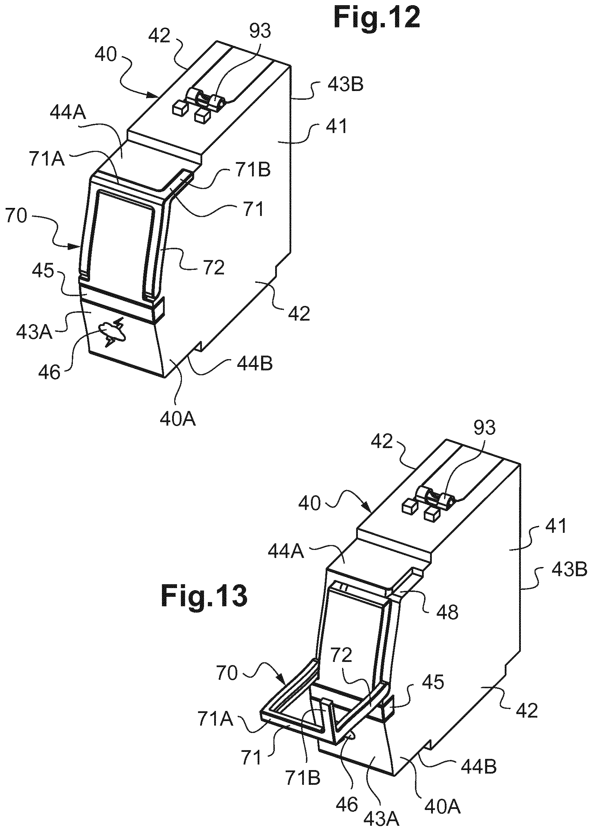

Dans le troisième mode de réalisation de la poignée, représenté sur les figures 12 et 13, la branche de préhension 71 comprend un montant transversal 71A qui s'étend entre les deux montants latéraux formant la branche de montage 72 de la poignée 70, et un pion 71B qui s'étend à partir de ce montant transversal.

Quel que soit le mode de réalisation envisagé, la branche de préhension est orientée sensiblement à angle droit par rapport à la branche de montage 52 ; 62 ; 72 ; 52', de manière à s'étendre contre la face transversale supérieure 24A ; 34A ; 44A ; 24A du boîtier de l'élément amovible 20 ; 30 ; 40 ; 20'.

Cette branche de préhension 51 ; 61 ; 71 ; 51' peut facilement être actionnée par le doigt de l'usage pour faire basculer la poignée autour de son axe de pivotement, vers sa position déployée.

Afin de faciliter cette opération, dans le premier mode de réalisation de la poignée, représenté sur les figures 1 à 8 et 15, la face externe de cette branche de préhension 51 ; 51', orientée vers l'utilisateur dans la position repliée de la poignée 50 ; 50', porte des picots 54 ; 54' qui facilitent la manipulation de la branche de préhension 51 ; 51' par l'utilisateur.

Avantageusement, la partie de la face avant 23A ; 33A ; 43A ; 23'A du boîtier 21 ; 31 ; 41 ; 21 qui reçoit la branche de montage 52 ; 62 ; 72 ; 52' de la poignée et la partie de la face transversale 24A ; 34A ; 44A ; 24'A du boîtier 21 ; 31 ; 41 ; 21' qui reçoit la branche de préhension 51 ; 61 ; 71 ; 51' de la poignée de l'élément amovible comprennent un renfoncement 28 ; 38 ; 48 ; 28' pour loger lesdites branches de montage et de préhension de la poignée dans sa position repliée.

Le renfoncement 28 ; 38 ; 48 ; 28' est ménagé de manière à ce que, dans la position repliée de la poignée, la surface externe de ladite branche de montage 52 ; 62 ; 72 ; 52' vient à l'affleurement de la face avant 23A ; 33A ; 43A ; 23'A du boîtier 21 ; 31 ; 41 ; 21'.

En outre ici, le renfoncement 28 ; 38 ; 48 ; 28' est tel que, dans la position repliée de la poignée, la surface externe de ladite branche de préhension 51 ; 61 ; 71 ; 51' vient à l'affleurement de la partie de la face transversale supérieure 24A ; 34A ; 44A ; 24'A du boîtier 21 ; 31 ; 41 ; 21' correspondant à la partie de façade de l'élément amovible.

Plus précisément, comme expliqué plus en détail ultérieurement, le renfoncement 28 ; 38 ; 48 ; 28' est tel que dans la position repliée de la poignée, la branche de préhension est logée dans le gabarit de la partie de façade 20A ; 30A ; 40A ; 20'A du boîtier 21 ; 31 ; 41 ; 21' de l'élément amovible.

Enfin, la surface externe de la poignée 50 ; 60 ; 70, 50' correspondant à la tranche de cette poignée, vient à l'affleurement des faces principales latérales 22 ; 32 ; 42 ; 22' du boîtier de l'élément amovible 20 ; 30 ; 40 ; 20'.

De cette façon, les dimensions de l'élément amovible conforme à l'invention, mesurées entre les faces principales latérales et entre les faces transversales du boîtier de cet élément amovible restent identiques à celles d'un élément amovible standard. Ceci assure que l'élément amovible conforme à l'invention est compatible avec les installations électriques courantes.

La présence de ce renfoncement diminuant cependant l'espace interne de l'élément amovible qui loge le mécanisme électrique de cet élément amovible, certaines pièces internes de l'élément amovible sont redimensionnées de manière à s'inscrire dans cet espace interne. La face avant 23A ; 33A ; 43A; 23'A du boîtier 21 ; 31 ; 41 ; 21' de l'élément amovible est en outre bombée vers l'avant de manière à ménager plus d'espace interne dans l'élément amovible tout en garantissant qu'il soit compatible avec les autres éléments des installations électriques existantes.

Selon une autre caractéristique particulièrement avantageuse du quatrième mode de réalisation de l'élément amovible 20' selon l'invention représenté sur les figures 14 à 16, il est prévu sur le bord arrondi de l'extrémité libre de chaque montant latéral de la branche de montage 52' de la poignée 50, un ergot 55' en saillie (voir plus particulièrement la figure 14), destiné à s'insérer dans un logement 28'A prévu en correspondance dans le renfoncement 28' du boîtier 21', lorsque la poignée 50' est en position repliée sur le boîtier 21' de l'élément amovible 20'. L'emboîtement ou l'encliquetage de chaque ergot 55' dans son logement 28'A correspondant constitue un moyen de verrouillage de la poignée en position repliée sur le boîtier et permet avantageusement de maintenir la poignée 50' en position repliée lors notamment du transport de l'élément amovible 20'. Ceci apporte une sécurité supplémentaire empêchant la mise en oeuvre intempestive de la poignée.

Comme représenté sur les figures 7 et 8 dans le cas du premier mode de réalisation, le coffret électrique 200 se présente sous la forme d'une boîte 210 parallélépipédique réalisée en matériau isolant et fermée à l'avant par le plastron 220.

Ce plastron 220 délimite des fenêtres 240 à travers lesquelles font saillie les parties de façade 20A des éléments amovibles 20 des appareillages électriques 100 montés sur le rail de support 230 fixé au fond du coffret électrique 200 (voir notamment la figure 8). Chaque fenêtre 240 présente la forme d'une fente s'étendant en regard du rail de support 230. Pour la sécurité électrique du coffret 200, la largeur de cette fenêtre 240 est ajustée pour laisser passer, à un jeu près, uniquement la partie de façade 20A de l'élément amovible 20 de l'appareillage modulaire 100.

Avantageusement, la branche de préhension 51 ; 61 ; 71 ; 51' forme ici un moyen de blocage de la poignée 50 ; 60 ; 70 ; 50' dans sa position repliée, adapté à coopérer avec une partie du plastron 220 du coffret électrique 200.

En effet, la branche de préhension 51 ; 61 ; 71 ; 51' de la poignée 50 ; 60 ; 70 de l'élément amovible 20 ; 30 ; 40 s'étend sur la partie de la face transversale supérieure 24A ; 34A ; 44A ; 24'A de l'élément amovible 20 ; 30 ; 40 ; 20' qui correspond à la partie de façade 20A ; 30A ; 40A; 20'A de l'élément amovible (figures 1, 5, 6, 9 et 12).

Ainsi, la tranche du plastron 220 du coffret 200 qui s'étend, à un jeu près, contre la face transversale supérieure 24A ; 34A; 44A; 24'A de l'élément amovible 20 ; 30 ; 40 ; 20' (voir figure 8) s'étend contre la branche de préhension 51 ; 61 ; 71 ; 51' de la poignée 50 ; 60 ; 70 ; 50'.

Il est donc impossible de faire pivoter la poignée 50 ; 60 ; 70 ; 50' lorsque le plastron 220 est en place dans le coffret 200, puisqu'un mouvement de pivotement amènerait la branche de préhension 51 ; 61 ; 71 ; 51' en butée contre la tranche du plastron 220.

Ceci est le cas quel que soit le mode de réalisation considéré. Dans les premier et quatrième modes de réalisation, la branche de préhension 51 ; 51' comporte en outre, à son extrémité libre, un retour 51A ; 51'A à l'équerre, qui, lorsque la poignée 50 ; 50' est dans sa position repliée, se positionne derrière le plastron 220 du coffret électrique 200 de manière à former un élément de blocage.

Le blocage de la poignée 50 ; 50' en présence du plastron 220 est ainsi parfaitement sécurisé.

Il est donc impossible d'utiliser la poignée pour retirer l'élément amovible de manière non intentionnelle tant que le plastron 220 du coffret électrique 200 est en place.

Lorsque l'utilisateur doit remplacer l'élément amovible 20 ; 30 ; 40 ; 20' de l'un des appareillages modulaires électriques 100 logés dans le coffret électrique 200, par exemple lorsque le voyant 25 ; 35 ; 45 de l'un des éléments amovibles 20 ; 30 ; 40 ; 20' des parafoudres décrit précédemment indique qu'un des éléments électriques (varistance) de cet élément amovible est endommagé, l'utilisateur commence par retirer le plastron 220 du coffret électrique 200.

Ce faisant, il libère la branche de préhension 51 ; 61 ; 71 ; 51' de la poignée 50 ; 60 ; 70 ; 50' de l'élément amovible 20 ; 30 ; 40 ; 20' concerné de sa coopération avec le plastron 220.

La poignée 50 ; 60 ; 70 ; 50' se trouve alors dans sa position repliée contre les faces correspondantes de l'élément amovible 20 ; 30 ; 40 ; 20' (figures 1, 9 et 12).

Lorsque la poignée est réalisée selon le premier le troisième ou le quatrième mode de réalisation, l'utilisateur pose son doigt sur la branche de préhension 51 ; 71 ; 51' de la poignée 50 ; 70 ; 50' et fait pivoter celle-ci vers lui (figures 2 et 13). La poignée 50 ; 70 ; 50' étant libre de pivoter, l'utilisateur amène facilement la poignée dans sa position déployée, représentée sur les figures 2 et 13.En ce qui concerne le mode de réalisation de l'invention représenté sur les figures 14 à 16, en tirant sur la poignée 50' l'utilisateur fait sortir les ergots 55' de leurs logements 28'A de sorte que ladite poignée 50' est libre de basculer vers sa position déployée.

Le débattement angulaire entre les positions repliée et déployée de la poignée est avantageusement compris entre 60 et 120 degrés, de préférence égal à 90 degrés.

En outre, les dimensions de la poignée 50 ; 70 ; 50' sont telles qu'avec ce débattement il est possible pour l'utilisateur de glisser ensuite son doigt entre la face arrière de la branche de préhension 51 ; 71 ; 51', tournée vers l'élément amovible 20 ; 40, 20' et la face avant 23A ; 43A ; 23'A de cet élément amovible 20, 40, 20'.

Il est alors aisé pour l'utilisateur de tirer vers lui la poignée 50 ; 70, 50' entraînant ainsi l'élément amovible 20 ; 40, 20' hors du logement 12 de l'embase 10 de l'appareillage électrique 100.

Cependant, d'autres cinématiques d'actionnement de la poignée peuvent être envisagées.

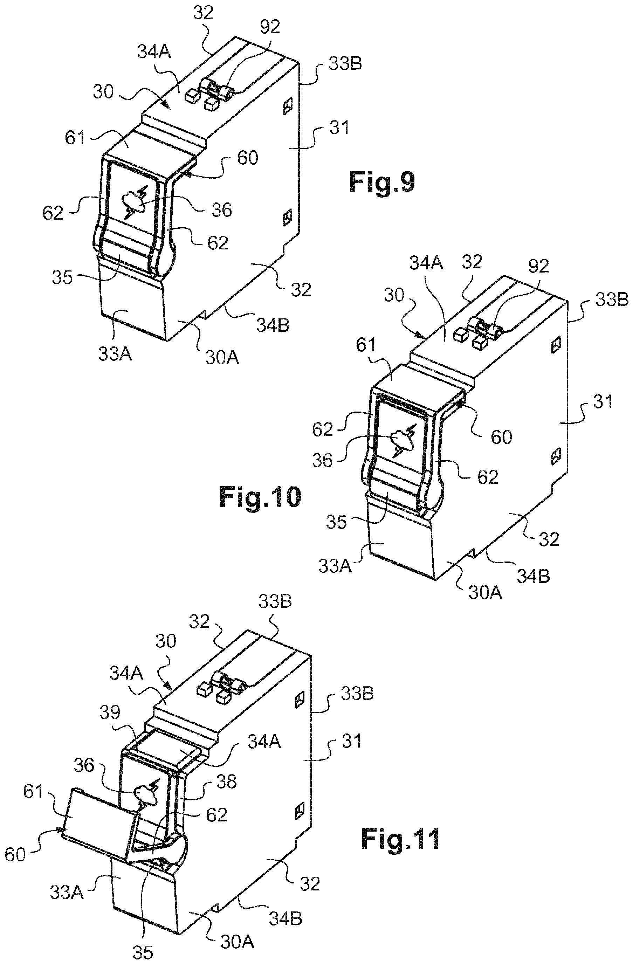

Dans le deuxième mode de réalisation, représenté sur les figures 9 à 11, il est prévu au surplus un moyen de verrouillage de la poignée 60 dans sa position repliée.

Ce moyen de verrouillage comprend, d'une part, une rainure 39 (figure 11) ménagée dans le renfoncement 38 de la face transversale supérieure 34A du boîtier 31 de l'élément amovible 30, et, d'autre part, une nervure complémentaire faisant saillie de la face arrière de la branche de préhension 61 de la poignée 60.

Cette nervure complémentaire est reçue dans la rainure 39 du renfoncement 38 lorsque la poignée 60 se trouve dans sa position repliée.

Ainsi, tout pivotement de la poignée 60 de l'élément amovible 30 est bloqué, même en l'absence du plastron 220 du coffret électrique 200, par la coopération de la rainure 39 du boîtier 31 et de nervure complémentaire de la poignée 60.

Ceci apporte une sécurité supplémentaire empêchant la mise en oeuvre intempestive de la poignée.

Pour libérer la poignée 60, l'utilisateur fait coulisser celle-ci vers le haut (figure 10), de manière à sortir la nervure complémentaire de la poignée hors de la rainure 39 du boîtier 31 de l'élément amovible 30.

Les ouvertures des faces principales latérales 32 du boîtier 31 qui accueillent les pions de la poignée 60 formant son axe de pivotement présentent à cet effet une forme allongée autorisant ce coulissement.

Chaque pion de la poignée 60 passe ainsi d'une première position de butée contre l'une des extrémités de cette ouverture allongée du boîtier à une deuxième position de butée contre l'autre extrémité de l'ouverture allongée.

Dans cette deuxième position de butée des pions de la poignée 60, la nervure complémentaire de cette poignée est sortie de la rainure du boîtier et le pivotement de la poignée est autorisé. L'utilisateur fait alors pivoter la poignée 60 vers lui.

Le débattement angulaire de la poignée est compris de préférence entre 60 et 120 degrés, de préférence égale à 90 degrés.

Comme dans les premier et troisième modes de réalisation, les dimensions de la poignée 60 sont telles qu'avec ce débattement il est possible pour l'utilisateur de glisser ensuite son doigt entre la face arrière de la branche de préhension 61, tournée vers l'élément amovible 30, et la face avant 33A de cet élément amovible.

Il est alors aisé pour l'utilisateur de tirer vers lui la poignée 60, entraînant ainsi l'élément amovible 30 hors du logement de l'embase de l'appareillage électrique.

## Revendications

1. Elément amovible (20 ; 30 ; 40 ; 20') à rapporter dans un logement (12) d'une embase (10) d'un appareillage modulaire (100) électrique destiné à être monté sur un rail de support (230), cet élément amovible (20 ; 30 ; 40 ; 20') comprenant un boîtier (21 ; 31 ; 41 ; 21') isolant de forme globalement parallélépipédique, présentant une face avant (23A ; 33A ; 43A ; 23'A) accessible à l'utilisateur, deux faces principales latérales (22 ; 32 ; 42 ; 22') parallèles s'élevant sur la hauteur du boîtier et deux faces transversales (24A, 24B ; 34A, 34B ; 44A, 44B ; 24'A, 24'B) opposées, ainsi que des moyens de préhension de ce boîtier, **caractérisé en ce que** lesdits moyens de préhension comportent une poignée (50 ; 60 ; 70 ; 50') présentant une forme en L avec une branche de montage (52 ; 62 ; 72 ; 52') montée pivotante sur ce boîtier et une branche de préhension (51 ; 61 ; 71 ; 71') pour faire pivoter la poignée (50 ; 60 ; 70 ; 50') entre une position repliée dans laquelle ladite poignée (50; 60; 70 ; 50') s'étend le long d'une partie de la face avant (23A ; 33A ; 43A ; 23'A) et d'une partie de l'une des deux faces transversales (24A ; 34A ; 44A ; 24'A) dudit boîtier (21 ; 31 ; 41 ; 21') adjacente à ladite face avant (23A ; 33A ; 43A ; 23'A), et une position déployée dans laquelle ladite poignée (50 ; 60 ; 70 ; 50') s'étend en saillie du boîtier (21 ; 31 ; 41 ; 21'), à partir de la face avant (23A ; 33A ; 43A ; 23'A) dudit boîtier (21 ; 31 ; 41 ; 21').

2. Elément amovible (20 ; 30 ; 40 ; 20') d'un appareillage modulaire électrique selon la revendication 1, dans lequel ladite poignée (50; 60; 70) est montée pivotante autour d'un axe de pivotement perpendiculaire aux faces principales latérales (22 ; 32 ; 42 ; 22') parallèles du boîtier (21; 31; 41 ; 21').

3. Elément amovible (20 ; 30 ; 40 ; 20') d'un appareillage modulaire électrique selon la revendication 2, dans lequel ledit axe de pivotement s'étend à proximité de la face avant (23A ; 33A ; 43A ; 23'A) du boîtier (21; 31; 41 ; 21').

4. Elément amovible (20 ; 30 ; 40 ; 20') d'un appareillage modulaire électrique selon l'une des revendications précédentes, dans lequel ladite branche de préhension (51 ; 61 ; 71 ; 51') de ladite poignée (50; 60; 70 ; 50') forme un moyen de blocage de cette poignée (50; 60; 70 ; 50') dans sa position repliée, adapté à coopérer avec une partie d'un plastron (220) d'un coffret électrique (200).

5. Elément amovible (20 ; 30 ; 40 ; 20') d'un appareillage modulaire électrique selon l'une des revendications précédentes, dans lequel la face avant (23A ; 33A ; 43A ; 23'A) et la face transversale (24A ; 34A ; 44A ; 24'A) correspondante du boîtier (21; 31; 41 ; 21') comprennent un renfoncement (28 ; 38 ; 48 ; 28') pour loger la poignée (50; 60; 70 ; 50') dans sa position repliée, de manière à ce que, dans cette position repliée, la surface externe de la poignée (50; 60; 70 ; 50') vient à l'affleurement de la face avant (23A ; 33A ; 43A ; 23'A) du boîtier (21; 31; 41 ; 21').

6. Elément amovible (20 ; 30 ; 40 ; 20') d'un appareillage modulaire électrique selon l'une des revendications précédentes, dans lequel la branche de montage (52 ; 62 ; 72 ; 52') de ladite poignée (50; 60; 70 ; 50') comprend deux montants latéraux qui, dans la position repliée de la poignée (50; 60; 70 ; 50'), longent les faces principales latérales (22 ; 32 ; 42 ; 22') parallèles du boîtier (21; 31; 41 ; 21').

7. Elément amovible (20 ; 20') d'un appareillage modulaire électrique selon l'une des revendications précédentes, dans lequel la branche de préhension (51 ; 51') comporte, à son extrémité libre, un retour (51A ; 51'A), qui, lorsque la poignée (50 ; 50') est dans sa position repliée, forme un élément de blocage adapté à se positionner derrière un plastron (220) d'un coffret électrique (200).

8. Elément amovible (20 ; 30 ; 40 ; 20') d'un appareillage modulaire électrique selon l'une des revendications précédentes, dans lequel le débattement angulaire entre les positions repliée et déployée de la poignée (50; 60; 70 ; 50') est compris entre 60 et 120 degrés.

9. Elément amovible (20 ; 30 ; 40 ; 20') d'un appareillage modulaire électrique selon l'une des revendications précédentes, dans lequel ledit boîtier (21; 31; 41 ; 21') renferme un mécanisme électrique de coupure pour un appareillage modulaire électrique (100) du type parafoudre.

10. Appareillage modulaire (100) électrique comprenant une embase (10) munie de moyens de montage (11) sur un rail de support (230) et un logement (12) logeant un élément amovible (20 ; 30 ; 40 ; 20') selon l'une des revendications précédentes, connecté électriquement à ladite embase (10).

## Patentansprüche

1. Abnehmbares Element (20; 30; 40; 20'), das in einem Aufnahmeraum (12) eines Sockels (10) eines auf einer Stützschiene (230) anzubringenden modularen elektrischen Geräts anzubringen ist, wobei das abnehmbare Element (20; 30; 40; 20') ein isolierendes, im Wesentlichen quaderförmiges Gehäuse (21; 31; 41; 21') aufweist, das eine für den Benutzer zugängliche Vorderseite (23A; 33A; 43A; 23'A), zwei sich in der Höhe des Gehäuses erhebende parallele seitliche Hauptseiten (22; 32; 42; 22') und zwei gegenüberliegende Querseiten (24A, 24B; 34A, 34B; 44A, 44B; 24'A, 24'B), sowie Mittel zum Anfassen des Gehäuses aufweist, **dadurch gekennzeichnet, daß** die Mittel zum Anfassen einen L-förmigen Griff (50; 60; 70; 50') mit einem auf dem Gehäuse schwenkbar montierten Montageteil (52; 62; 72; 52') und einem Teil zum Anfassen (51; 61; 71; 51'), um den Griff (50; 60; 70; 50') zwischen einer eingeschwenkten Stellung, in der sich der Griff (50; 60; 70; 50') entlang eines Teils der Vorderseite (23A; 33A; 43A; 23'A) und eines an der Vorderseite (23A; 33A; 43A; 23'A) anliegenden Teils einer der beiden Querseiten (24A, 24B; 34A, 34B; 44A, 44B; 24'A, 24'B) des Gehäuses (21; 31; 41; 21') erstreckt, und einer ausgeschwenkten Stellung, in der sich der Griff (50; 60; 70; 50') von der Vorderseite (23A; 33A; 43A; 23'A) des Gehäuses (21; 31; 41; 21') ausgehend vom Gehäuse (21; 31; 41; 21') hervorstehend erstreckt, zu schwenken, aufweisen.

2. Abnehmbares Element (20; 30; 40; 20') eines modularen elektrischen Geräts gemäß Anspruch 1, bei dem der Griff (50; 60; 70) um eine zu den parallelen seitlichen Hauptseiten (22; 32; 42; 22') des Gehäuses (21; 31; 41; 21') senkrechte Schwenkachse schwenkbar angebracht ist.

3. Abnehmbares Element (20; 30; 40; 20') eines modularen elektrischen Geräts gemäß Anspruch 2, bei dem sich die Schwenkachse in der Nähe der Vorderseite (23A; 33A; 43A; 23'A) des Gehäuses (21; 31; 41; 21') erstreckt.

4. Abnehmbares Element (20; 30; 40; 20') eines modularen elektrischen Geräts gemäß einem der vorangehenden Ansprüche, bei dem der Teil zum Anfassen (51; 61; 71; 51') des Griffs (50; 60; 70; 50') ein Mittel zum Blockieren des Griffs (50; 60; 70; 50') in seiner eingeschwenkten Stellung bildet, der dazu ausgelegt ist, mit einem Teil einer Frontplatte (220) eines elektrischen Schranks (200) zusammenzuwirken.

5. Abnehmbares Element (20; 30; 40; 20') eines modularen elektrischen Geräts gemäß einem der vorangehenden Ansprüche, bei dem die Vorderseite (23A; 33A; 43A; 23'A) und die entsprechende Querseite (24A; 34A; 44A; 24'A) des Gehäuses (21; 31; 41; 21') eine Vertiefung (28; 38; 48; 28') zum Unterbringen des Griffs (50; 60; 70; 50') in seiner eingeschwenkten Stellung aufweisen, damit die äußere Oberfläche des Griffs (50; 60; 70; 50') in dieser eingeschwenkten Stellung mit der Vorderseite (23A; 33A; 43A; 23'A) des Gehäuses (21; 31; 41; 21') fluchtet.

6. Abnehmbares Element (20; 30; 40; 20') eines modularen elektrischen Geräts gemäß einem der vorangehenden Ansprüche, bei dem der Montageteil (52; 62; 72; 52') des Griffs (50; 60; 70; 50') zwei seitliche Holme aufweist, die sich in der eingeschwenkten Stellung des Griffs (50; 60; 70; 50') entlang den parallelen seitlichen Hauptseiten (22; 32; 42; 22') des Gehäuses (21; 31; 41; 21') erstrecken.

7. Abnehmbares Element (20; 30; 40; 20') eines modularen elektrischen Geräts gemäß einem der vorangehenden Ansprüche, bei dem der Teil zum Anfassen (51; 51') an seinem freien Ende eine Rückführung (51A; 51'A) aufweist, die, wenn sich der Griff (50; 50') in der eingeschwenkten Stellung befindet, ein Sperrelement bildet, das dazu ausgelegt ist, sich hinter einer Frontplatte (220) eines elektrischen Schranks (200) zu positionieren.

8. Abnehmbares Element (20; 30; 40; 20') eines modularen elektrischen Geräts gemäß einem der vorangehenden Ansprüche, bei dem der Schwenkbereich zwischen der eingeschwenkten und der ausgeschwenkten Stellung des Griffs (50; 60; 70; 50') zwischen 60 und 120 Grad beträgt.

9. Abnehmbares Element (20; 30; 40; 20') eines modularen elektrischen Geräts gemäß einem der vorangehenden Ansprüche, bei dem das Gehäuse (21; 31; 41; 21') einen elektrischen Trennmechanismus für ein modulares elektrisches Gerät (100) vom Typ eines Blitzschutzes aufweist.

10. Modulares elektrisches Gerät (100), das einen Sockel (10) mit Mitteln (11) zum Anbringen auf einer Stützschiene (230) und eine Aufnahme (12), in der ein mit dem Sockel (10) elektrisch verbundenes abnehmbares Element (20; 30; 40; 20') gemäß einem der vorangehenden Ansprüche untergebracht ist, aufweist.

## Claims

1. A removable element (20; 30; 40; 20') for fitting in a housing (12) of a base (10) of an electrical module (100) for mounting on a support rail (230), the removable element (20; 30; 40; 20') comprising an insulating casing (21; 31; 41; 21') of generally rectangular parallelepiped shape, presenting a front face (23A; 33A; 43A; 23'A) that is accessible to the user, two parallel main side faces (22; 32; 42; 22') that extend over the height of the casing, and two opposite transverse faces (24A, 24B; 34A, 34B; 44A, 44B; 24'A; 24'B), and grip means for gripping the casing, the removable element being **characterized in that** said grip means comprise a handle (50; 60; 70; 50') presenting an L-shape with a mounting branch (52; 62; 72; 52') that is pivotally mounted on the casing, and a grip branch (51; 61; 71; 71') for pivoting the handle (50; 60; 70; 50') between a folded-up position in which said handle (50; 60; 70; 50') extends along a portion of the front face (23A; 33A; 43A; 23'A) and a portion of one of the two transverse faces (24A; 34A; 44A; 24'A) of said casing (21; 31; 41; 21') adjacent to said front face (23A; 23A; 43A; 23'A), and a deployed position in which said handle (50; 60; 70; 50') projects from the casing (21; 31; 41; 21'), starting from the front face (23A; 33A; 43A; 23'A) of said casing (21; 31; 41; 21').

2. A removable element (20; 30; 40; 20') of an electrical module according to claim 1, wherein said handle (50; 60; 70) is mounted to pivot about a pivot axis that is perpendicular to the parallel main side faces (22; 32; 42; 22') of the casing (21; 31; 41; 21').

3. A removable element (20; 30; 40; 20') of an electrical module according to claim 2, wherein said pivot axis extends in the proximity of the front face (23A; 33A; 43A; 23'A) of the casing (21; 31; 41; 21').

4. A removable element (20; 30; 40; 20') of an electrical module according to any preceding claim, wherein said grip branch (51; 61; 71; 51') of said handle (50; 60; 70; 50') forms blocking means for blocking the handle (50; 60; 70; 50') in its folded-up position, which blocking means are adapted to co-operate with a portion of a front panel (220) of an electrical box (200).

5. A removable element (20; 30; 40; 20') of an electrical module according to any preceding claim, wherein the front face (23A; 33A; 43A; 23'A) and the corresponding transverse face (24A; 34A; 44A; 24'A) of the casing (21; 31; 41; 21') include a recess (28; 38; 48; 28') for housing the handle (50; 60; 70; 50') in its folded-up position, in such a manner that, in this folded-up position, the outer surface of the handle (50; 60; 70; 50') lies flush with the front face (23A; 33A; 43A; 23'A) of the casing (21; 31; 41; 21').

6. A removable element (20; 30; 40; 20') of an electrical module according to any preceding claim, wherein the mounting branch (52; 62; 72; 52') of said handle (50; 60; 70; 50') comprises two side legs that, in the folded-up position of the handle (50; 60; 70; 50'), run along the parallel main side faces (22; 32; 42; 22') of the casing (21; 31; 41; 21').

7. A removable element (20; 20') of an electrical module according to any preceding claim, wherein at its free end, the grip branch (51; 51') includes a lip (51A; 51'A) that, when the handle (50; 50') is in its folded-up position, forms a blocking element that is adapted to be positioned behind a front panel (220) of an electrical box (200).

8. A removable element (20; 30; 40; 20') of an electrical module according to any preceding claim, wherein the angular movement between the folded-up and deployed positions of the handle (50; 60; 70; 50') lies in the range 60° to 120°.

9. A removable element (20; 30; 40; 20') of an electrical module according to any preceding claim, wherein said casing (21; 31; 41; 21') encloses an electrical interrupter mechanism for an electrical module (100) of the lightning-arrester type.

10. An electrical module (100) comprising a base (10) provided with mounting means (11) for mounting on a support rail (230) and a housing (12) for housing a removable element (20; 30; 40; 20') according to any preceding claim, connected electrically to said base (10) .
